# EUROPÄISCHE PATENTSCHRIFT

(11) **EP 2 953 894 B1**
(45) Veröffentlichungstag und Bekanntmachung des Hinweises auf die Patenterteilung: **07.08.2019**
(21) Anmeldenummer: 14706473.7
(22) Anmeldetag: 07.02.2014
(51) Int. Cl.: C01B 21/26, C01B 21/40, B01J 19/24

(54) **VERFAHREN UND PRODUKTIONSANLAGE ZUM HERSTELLEN VON SALPETERSÄURE**
PROCESS AND PRODUCTION PLANT FOR PREPARING NITRIC ACID
PROCÉDÉ ET ÉQUIPEMENT DE PRODUCTION POUR PRODUIRE DE L'ACIDE NITRIQUE

(30) Priorität: 07.02.2013 DE 102013002201
(43) Veröffentlichungstag der Anmeldung: 16.12.2015
(73) Patentinhaber: Messer Group GmbH, 65812 Bad Soden (DE); Messer Austria GmbH, 2352 Gumpoldskirchen (AT)
(72) Erfinder: BACHLEITNER, Walter, A-4600 Wels (AT); BERGER, Thomas, 45257 Essen (DE); ROHOVEC, Joachim, A-2500 Baden bei Wien (AT)
(74) Vertreter: Münzel, Joachim R.
(86) Internationale Anmeldenummer: PCT/EP2014/000333
(87) Internationale Veröffentlichungsnummer: WO 2014/121938

(56) Entgegenhaltungen:
- EP-A1- 0 799 794
- EP-A1- 1 013 604
- GB-A- 547 959

## Beschreibung

Die vorliegende Erfindung betrifft ein Verfahren zum Herstellen von Salpetersäure nach dem Oberbegriff des Patentanspruchs 1. Die Erfindung betrifft ferner eine Produktionsanlage zum Herstellen von Salpetersäure.

Zur technischen Herstellung von Salpetersäure kommt im Allgemeinen ein vierstufiges, katalytisches Ammoniakoxidationsverfahren (Ostwald-Verfahren) zum Einsatz. Im ersten Schritt wird dabei Ammoniak und Sauerstoff in einem Reaktor (im Folgenden auch "Ammoniakverbrennungseinrichtung" genannt) an einem meist aus Edelmetallen, beispielsweise Platin-Rhodium, bestehenden Netzkatalysator, zu Stickstoffmonoxid und Wasserdampf umgesetzt:
(1)

   4NH₃ + 5 O₂ ⇄ 4 NO + 6H₂O

Um die angestrebte Reaktion gegenüber Konkurrenzreaktionen zu begünstigen, liegt im Reaktor eine möglichst hohe Betriebstemperatur von beispielsweise 900°C vor, die lediglich durch die Stabilität des Edelmetallnetzes und den damit verbundenen drohenden Verlust von Edelmetall begrenzt wird. Im Allgemeinen arbeitet man mit einer überstöchiometrischen Menge an Luft bzw. Sauerstoff, um die Entflammbarkeit der Reaktionsmischung und die Reaktorausgangstemperatur unter Kontrolle zu halten und zusätzlichen Sauerstoff für nachfolgende Oxidationsreaktionen bereitzustellen. Anschließend wird der Reaktoraustrag in einem Kondensator auf eine Temperatur abgekühlt, in der das Wasser kondensiert. Dabei reagiert ein Teil des Stickstoffmonoxids mit Wasser und Sauerstoff unter Bildung einer wässerigen Salpetersäure enthaltenden Lösung, die im Übrigen auch Stickoxide, insbesondere Stickstoffmonoxid, in gelöster Form enthält. Das verbleibende, nicht in Lösung gehende Gasgemisch wird einem Absorptionsturm (im Folgenden auch "Absorptionskolonne" genannt) zugeführt, in welchem ein Teil des gasförmigen Stickstoffmonoxids mit Sauerstoff, der in Form von Luftsauerstoff oder in Form von reinem Sauerstoff bereitgestellt wird, zu Stickstoffdioxid bzw. dessen Dimer Distickstofftetraoxid oxidiert, die anschließend mit Wasser zu Salpetersäure umgesetzt werden:
(2)

   2NO + O₂ ⇄ 2NO₂
(3)

   2NO₂ ⇄ N₂O₄
(4)

   NO₂+ H₂O ⇄ HNO₃ + NO
(5)

   2N₂O₄ + O₂ + 2H₂O ⇄ 4HNO₃

Das Wasser durchläuft dabei den Absorptionsturm üblicherweise im Gegenstrom zum aufsteigenden Gasstrom. Die Salpetersäure sammelt sich am Boden des Absorptionsturms in einer wässrigen Lösung an. Diese Salpetersäure enthaltende Lösung wird, ebenso wie die bereits im Kondensator gebildete Salpetersäure enthaltende Lösung abgezogen, zum Kopf des Absorptionsturms gepumpt und dort eingesprüht, um die noch in der Lösung enthaltenen nitrosen Gase zu Salpetersäure umzusetzen. In vielen Fällen werden auch mehrere Absorptionstürme hintereinander geschaltet, wobei die Reihe der Absorptionstürme vom Gasstrom bzw. der abgezogen Salpetersäure im Gegenstrom durchlaufen wird. Um die Absorptionsfähigkeit der nitrosen Gase zu erhöhen, werden die Gase im Absorptionsturm bzw. in den Absorptionstürmen auf einen höheren Druck von 1 bis 15 bar(g) gebracht. Bei Anlagen, deren Absorptionskolonnen auf einem vergleichsweise niedrigen Druck von 1 bis 5 bar(g) arbeiten (Nieder- und Mitteldruckanlagen), ist der Anteil nitroser Abgase im Abgas sehr hoch, was insbesondere auf einen niedrigen Sauerstoffpartialdruck in der üblicherweise als sauerstoffhaltiges Gas in der Absorptionskolonne eingesetzten Luft zurückzuführen ist. Das Anlegen höherer Drücke führt zwar zu einer Verringerung des Restgehaltes an Stickoxiden im Abgas, ist jedoch mit erheblichen Mehrkosten für die Kompression und die entsprechend für höhere Drücke geeignete Auslegung der Anlagenkomponenten verbunden.

Um die Effizienz des Verfahrens zu steigern wurde daher bereits versucht, durch Einleitung zusätzlichen Sauerstoffs an verschiedenen Stellen den Sauerstoffpartialdruck zu erhöhen und somit den Anteil nitroser Gase im Abgas zu reduzieren.

So wird in der EP 0 799 794 A1 vorgeschlagen, Sauerstoff oder ein mit Sauerstoff angereichertes Gas in den oben skizzierten Prozess zur Salpetersäureproduktion stromab zur Ammoniakverbrennungseinrichtung, jedoch stromauf zur Absorptionskolonne zuzuführen.

In der GB 547 959 A wird vorgeschlagen, zur Erzeugung von hochreiner Salpetersäure ein Gemisch aus mäßig konzentrierter Salpetersäure und flüssigem Distickstofftetraoxid (N₂O₄) in einem Reaktor mit Sauerstoff unter hohem Druck zusammenzuführen.

Gemäß der Lehre der US 5 266 291 B1 und der US 5 360 603 B1 wird mit Sauerstoff angereicherte Luft in den Ammoniakoxidationsreaktor eingeleitet. Der zur Verfügung stehende überschüssige Sauerstoff ermöglicht eine Erhöhung der Ammoniakzufuhr und somit eine Erhöhung der bestehenden Kapazität; jedoch muss zugleich die Temperatur des Systems und die Entflammbarkeit durch Einleitung von Wasser oder Inertgasen in den Eingangsteil des Reaktors unter Kontrolle gehalten werden.

In der EP 1 013 604 A1 wird vorgeschlagen, zusätzlichen Sauerstoff in den salpetersäurehaltigen Prozessstrom zu injizieren, um ein Gasblasen/FlüssigkeitsGemisch darin zu bilden, welches eine feine Dispersion von Gasblasen mit Durchmessern von weniger als etwa 0,1 mm aufweist. Dadurch wird eine große Grenzfläche zwischen dem Gas und dem Flüssigkeitsgemisch erzielt, wodurch Verunreinigungen in der entstehenden Salpetersäure minimiert und der Bedarf an zusätzlich in das System eingespeisten Sauerstoff reduziert werden sollen.

Aus der US 4 235 858 B1 ist ein Verfahren zur Salpetersäureproduktion bekannt, bei denen kalter Sauerstoff (T<0°C) in den Absorptionsturm geleitet wird. Die Einleitung erfolgt dabei in den Gasraum des Absorptionsturms. Die tiefe Temperatur des Sauerstoffs soll die Erzeugung von Stickstoffdioxid bzw. Distickstofftetraoxid aus Stickstoffmonoxid entsprechend (2) und (3) fördern und damit insgesamt die Salpetersäureproduktion steigern.

Trotz derartiger Verbesserungen ist es möglich, eine weitere Kapazitätssteigerung und Prozessoptimierung des eingangs beschriebenen Verfahrens zur Salpetersäureproduktion zu erreichen, was zugleich Aufgabe der vorliegenden Erfindung ist.

Gelöst ist diese Aufgabe durch ein Verfahren mit den Merkmalen des Patentanspruchs 1 sowie durch eine Produktionsanlage zur Herstellung von Salpetersäure mit den Merkmalen des Patentanspruchs 6. Vorteilhafte Ausgestaltungen der Erfindung werden in den Unteransprüchen angegeben.

Das erfindungsgemäße Verfahren zum Herstellen von Salpetersäure ist also dadurch gekennzeichnet, dass in die wässerige, Salpetersäure enthaltende Lösung, die bei der Kondensation der Reaktionsprodukte der Ammoniakverbrennung im Kondensator und/oder bei der Absorption der Stickoxide enthaltenden Gase in dem Absorptionsturm (oder den Absorptionstürmen) anfällt und über Steigleitungen einem oberen Bereich, insbesondere dem Kopfraum, des Absorptionsturms (oder den Kopfräumen der Absorptionstürme) zugeführt werden, Sauerstoff eingeleitet wird. Die Erfindung geht von dem Grundgedanken aus, dass in der Salpetersäure enthaltenden Lösung auch Stickoxide (im wesentlichen Stickstoffmonoxid) in gelöster Form enthalten sind. Durch die Einleitung von Sauerstoff reagieren diese Stickoxide mit Sauerstoff und Wasser:
(6)

   H₂O + 2NO + 1½ O₂ ⇄ 2HNO₃

Diese Reaktion läuft im Wesentlichen in Richtung der Bildung von Salpetersäure ab, die Rückreaktion ist vernachlässigbar. Da ein höherer Druck der gasförmigen Ausgangsstoffe die Reaktion begünstigt, wird die Salpetersäure enthaltende Lösung vor der Einleitung des Sauerstoffs "verdichtet", also auf einen Druck gebracht, der höher als der Betriebsdruck im Absorptionsturm ist. Erfindungsgemäß wird der Sauerstoff dazu an einem Punkt in das System eingespeist, an dem ohnehin ein besonders hoher Druck herrscht, nämlich in die geodätisch unteren Abschnitte der Steigleitungen, da schon aufgrund des hydrostatischen Drucks bei der Förderung der Salpetersäure enthaltenden Lösung in den Kopfraum eines Absorptionsturms ein gegenüber dem Betriebsdruck des Absorptionsturms erhöhter Druck herrscht.

Bevorzugt erfolgt daher die Einleitung des Sauerstoffs jeweils an einem Punkt der Steigleitung, der in Höhe oder unterhalb der Höhe des Bodens desjenigen Absorptionsturmes liegt, in dessen oberen Bereich die Steigleitung einmündet. Die Erfindung umfasst jedoch auch solche Ausführungsformen, bei denen in der Steigleitung oder in einer davon abzweigenden Bypassleitung ein hoher Druck erzeugt wird, insbesondere ein Druck, der höher ist, als es dem hydrostatischen Druck der Salpetersäure enthaltenden Lösung in der

Steigleitung entspricht. Im Rahmen der Erfindung vorstellbar ist im Übrigen auch eine chargenweise Behandlung der Salpetersäure enthaltenden Lösung mit Sauerstoff unter entsprechend hohen Drücken in Druckbehältern. Im Rahmen der Erfindung ist im Übrigen nicht ausgeschlossen, dass ergänzend zum Einbringen von Sauerstoff in die Salpetersäure enthaltende Lösung zusätzlicher Sauerstoff andernorts eingeleitet wird, beispielsweise unmittelbar in den Absorptionsturm.

Als besonders vorteilhaft erweist es sich, wenn die Salpetersäure enthaltende Lösung vor der Zuführung des Sauerstoffs auf einem Druck verdichtet wird, der höher, beispielsweise um mindestens 1 bis 2 bar, als der Betriebsdruck der Absorptionskolonne ist, in die die Salpetersäure enthaltende Lösung eingebracht wird. Dies ist insbesondere für Nieder- und Mitteldruckkolonnen von Vorteil, die einen Betriebsdruck von lediglich 1 bis 5 bar(g) aufweisen. Bevorzugt wird die Salpetersäure enthaltende Lösung in diesen Fällen vor der Zuführung des Sauerstoffs auf einen Druck von bevorzugt zumindest 4,5 bar(g) gebracht. Durch zusätzliche Maßnahmen zur Druckerhöhung, wie beispielsweise entsprechend ausgelegte Fördereinrichtungen kann eine zusätzlich vorteilhafte Verdichtung erreicht werden, beispielsweise auf einen Wert zwischen 5 und 15 bar(g).

Als "Sauerstoff" kommt bevorzugt Sauerstoff mit einer Reinheit von wenigstens 95 Vol.-% zum Einsatz, jedoch kann der Sauerstoff auch in Form von Luft oder als sonstiges, Sauerstoff enthaltendes Gasgemisch zugeführt werden. Der Sauerstoff wird der Salpetersäure enthaltenden Lösung in Gasform oder aber in tiefkalt verflüssigter Form zugeführt, wobei zumindest im letztgenannten Fall darauf zu achten ist, dass die Strömungswege durch die Zuführung des tiefkalten Mediums nicht vereisen. Alternativ kann flüssiger Sauerstoff vor seiner Zuführung an die Salpetersäure enthaltende Lösung verdampft werden. Dies kann in einem üblichen Luftverdampfer erfolgen, oder der Kälteinhalt des flüssigen Sauerstoffs wird anderweitig genutzt, beispielsweise zur vorgenannten Kühlung der Reaktionsprodukte der Ammoniakverbrennung.

Eine vorteilhafte Weiterbildung der Erfindung sieht vor, dass der Sauerstoff bzw. das Sauerstoff enthaltende Gas mit einer Temperatur unter Umgebungstemperatur, bevorzugt von unter 0°C zugeführt wird. Die Erfindung geht bei dieser Ausführungsform von der Erkenntnis aus, dass die in der Steigleitung und anschließend im Absorptionsturm ablaufenden exothermen Reaktionsschritte umso rascher verlaufen, je tiefer die Temperatur ist. Durch die Zuführung des kalten bzw. tiefkalten Sauerstoffs wird die Temperatur des reaktiven Gemisches abgesenkt und somit die Reaktionsgeschwindigkeit beschleunigt. Der erfindungsgemäß benötigte kalte Sauerstoff wird beispielsweise in einer thermisch gut isolierten Tankanlage bevorratet und/oder kann unmittelbar dem Sauerstoff-Produktstrom einer Luftzerlegungsanlage entnommen werden. Da im zuletzt genannten Fall der Sauerstoff einer solchen Anlage bereits in tiefkalter flüssiger Form anfällt, entfallen in diesem Fall aufwändige Apparaturen zur Kühlung des Sauerstoffs. Insofern ist es besonders vorteilhaft, eine Einrichtung zur Salpetersäureproduktion mit einer kryogenen Luftzerlegungsanlage anlagentechnisch zu kombinieren.

Eine abermals bevorzugte Ausgestaltung der Erfindung sieht vor, dass von der Salpetersäure enthaltenden Lösung in einer der entsprechenden Steigleitung zugeordneten Bypassleitung ein Teilstrom abgezweigt wird, der verdichtet, mit Sauerstoff angereichert und anschließend dem Hauptstrom der Salpetersäure enthaltenden Lösung vor dessen Zuführung an den Kopfraum des Absorptionsturms zugeführt wird. Es genügt bei dieser Ausführungsform also, nur den Teilstrom auf einen höheren Druck von beispielsweise 5 bis 15 bar zu verdichten, in den der Sauerstoff anschließend eingebracht wird.

Eine erfindungsgemäße Produktionsanlage zum Herstellen von Salpetersäure umfasst eine Ammoniakverbrennungsanlage zum Umsetzen von Ammoniak mit Sauerstoff zu Stickoxiden und Wasserdampf, einen mit der Ammoniakverbrennungsanlage verbundenen Kondensator zum Abkühlen der Reaktionsprodukte aus der Ammoniakverbrennungsanlage auf eine Temperatur unterhalb der Kondensationstemperatur von Wasser, wenigstens einen, stromab zum Kondensator angeordneten Absorptionsturm zum Waschen des im Kondensator entstehenden Gasgemisches mit Wasser, wenigstens eine mit einer Fördereinrichtung ausgerüstete Steigleitung zum Zuführen einer Salpetersäure enthaltenden Lösung aus dem Kondensator oder aus dem Bodenbereich des Absorptionsturms oder der Absorptionstürme, die in einen (gegenüber dem Bodenbereich) oberen Bereich des Absorptionsturms oder der Absorptionstürme ausmündet, sowie eine mit einer Quelle für Sauerstoff verbindbare Sauerstoffzuleitung, die an einer Eintragseinrichtung in einem geodätisch unteren Bereich in die Steigleitung, stromab zur Fördereinrichtung, einmündet. Als Eintragseinrichtung kommt beispielsweise eine Eintragslanze oder eine Venturidüse in Betracht. Wesentlich für die Erfindung ist, dass das Eintragssystem geeignet ist, den eingetragenen Sauerstoff und die Salpetersäure enthaltende Lösung schnell und innig miteinander zu vermischen und aufgrund eines im Reaktionsbereich erhöhten Drucks die Bildung von Salpetersäure in der Steigleitung zu begünstigen. Die Eintragseinrichtung ist daher in einem - geodätisch gesehen - unteren Bereich der Steigleitung angeordnet, und zwar befindet sich das Eintragssystem erfindungsgemäß in Höhe oder unterhalb der Höhe des Bodens desjenigen Absorptionsturms, in dessen oberen Bereich (z.B. dem Kopfraum) die Salpetersäure enthaltende Lösung aufgegeben wird. Diese Ausgestaltung hat insbesondere zwei Vorteile: Zum einen wird der hydrostatische Druck der in der Steigleitung vorhandenen Flüssigkeitssäule dazu genutzt, einen gegenüber dem Betriebsdruck im Absorptionsturm erhöhten Druck bereitzustellen, der die Erzeugung von Salpetersäure im Steigrohr begünstigt. Zum anderen wird der gesamte sich anschließende Abschnitt der Steigleitung zwischen Eintragsystem und Kopfraum als Reaktor zur Durchführung der oben genannten Reaktion (6) zur Erzeugung von Salpetersäure genutzt. Daher ist es besonders vorteilhaft, wenn Mittel zum Erhöhen der Kontaktzeit vorgesehen sind, beispielsweise ein vergrößerter Strömungsquerschnitt dieses Abschnitts der Steigleitung, aufgrund dessen die Strömungsgeschwindigkeit der dadurch geführten Flüssigkeit reduziert ist, oder eine Verlängerung der Steigleitung, in der die Reaktanden miteinander in Kontakt treten.

Bei einer vorteilhaften Variante der Erfindung umfasst die Steigleitung eine Bypassleitung, in die die Sauerstoffzuleitung einmündet. Diese Ausführungsform ist also dadurch gekennzeichnet, dass von der Salpetersäure enthaltenden Lösung ein Teilstrom abgezweigt wird, der auf den gewünschten Druck verdichtet, mit Sauerstoff angereichert und anschließend dem Hauptstrom der Salpetersäure enthaltenden Lösung vor dessen Zuführung an den Kopfraum des Absorptionsturms wieder zugeführt wird. Auch die Bypassleitung befindet sich zweckmäßigerweise in einem geodätisch unteren Abschnitt der Steigleitung.

In einer abermals vorteilhaften Ausgestaltung der Erfindung ist in der Steigleitung und/oder der Bypassleitung eine Einrichtung zur Druckerhöhung vorgesehen, mittels der der Druck in der Steigleitung bzw. in der Bypassleitung auf einen Wert bringbar ist, der höher als der zum Fördern der Salpetersäure enthaltenden Lösung zum Kopf des Absorptionsturms erforderliche hydrostatische Druck ist. Der auf diese Weise erhöhte Druck von beispielsweise 10-15 bar(g) begünstigt das Einlösen des Sauerstoffs und die Bildung von Salpetersäure in der Steigleitung.

Bevorzugt ist die Eintragseinrichtung mit einem Druckventil ausgerüstet, mittels dem ein minimaler Wert für den Überdruck des zugeführten Sauerstoffs gegenüber dem Druck in der Steigleitung festgelegt werden kann. Ein derartiges Druckventil umfasst beispielsweise ein Absperrglied, das nur gegen die Wirkung einer Rückstellfeder in seine Öffnungsposition bringbar ist. Durch die Wahl oder Einstellung der Federkraft der Rückstellfeder kann leicht ein Mindestüberdruck von beispielsweise 0,1 bis 10 bar festgelegt werden, den der Sauerstoff bei seiner Zuführung aufweisen soll.

Eine bevorzugte Ausgestaltung der Erfindung sieht vor, dass die Eintragseinrichtung mit einem Endabschnitt ausgerüstet ist, der im wesentlichen in der Querschnittsmitte des Steigrohrs ausmündet, und dass im Bereich vor der Mündungsöffnung der Injektionseinrichtung eine Mischstrecke zum innigen Durchmischen von Sauerstoff und Salpetersäure enthaltender Lösung vorgesehen ist. Bei dieser Ausführungsform wird durch die Ausgestaltung der Eintragseinrichtung vermieden, dass der zugeführte Sauerstoff unmittelbar mit der Wand der Steigleitung in Kontakt tritt. Auf diese Weise werden starke Korrosionen aufgrund des eingetragenen Sauerstoffs an der Steigleitung vermieden. Die Mischstrecke umfasst dabei den verbleibenden Abschnitt der Steigleitung stromab zur Eintragseinrichtung; bevorzugt ist diese daher möglichst lang ausgebildet, oder er weist einen verbreiterten, die Strömungsgeschwindigkeit der Salpetersäure enthaltenden Lösung in diesem Bereich verlangsamenden Öffnungsquerschnitt auf.

Eine weiter vorteilhafte Ausgestaltung der Erfindung sieht vor, dass die Eintragseinrichtungen und/oder die stromab zur Eintragseinrichtung angeordneten Abschnitte der Steigleitung und/oder die Bypassleitung, in die die der Sauerstoff eingespeist wird, mit einem Katalysator ausgerüstet sind, um die Reaktion der in der Salpetersäure enthaltendenden Lösung vorliegenden Stickoxide mit dem eingeleiteten Sauerstoff zu begünstigen. Beispielsweise kann innerhalb einer Steigleitung oder einer Bypassleitung eine Packung mit Raschig-Ringen oder sonstigen Füllkörpern vorgesehen sein, die geeignete katalytischen Füllmaterialien aufweisen, welche die Oxydationsreaktionen beschleunigen können. Als Katalysatoren kommen beispielweise Metall-Katalysatoren in Betracht, die eine starke O₂₋Chemiesorption zeigen können und deshalb grundsätzlich einsetzbar sind, wie beispielsweise Metallkatalysatoren, die ein Metall oder mehrere Metalle aus folgender Gruppe enthalten: Ti, Zr, Hf, V, Nb, Ta, Cr, Mo, W, Fe, Ru, Os, Ni, Co, Rh, Pd, Pt, Ir, Mn, Cu; AI, Au; Li, Na, K, Mg, Ag, Zn, Cd, In, Si, Ge, Sn, Pb, As, Sb, Bi.

Dabei kann besonders bevorzugt eine Aufbringung dieser Katalysatoren in fein verteilter Form auf gesinterten keramischen Hohlkörpern erfolgen. So werden beispielsweise gesintertes SiO₂, Al₂O₂ oder Alumosilikate, beispielsweise NaAlSiO₃ oder KAlSiO₃, häufig in der Katalysator-Industrie eingesetzt und können nach ggf. notwendiger Adaption auch hier Verwendung finden.

Die eingesetzten Katalysator-Füllungen können auch in den vorgenannten Bypassleitungen Verwendung finden und so zu schnelleren Reaktionen und verbesserten Ausbeuten führen.

Anhand der Zeichnungen soll ein Ausführungsbeispiel der Erfindung näher erläutert werden. In schematischen Ansichten zeigen:
- Fig. 1:: Den Schaltplan einer erfindungsgemäßen Produktionsanlage zum Herstellen von Salpetersäure,
- Fig. 2:: Eine Einrichtung zum Eintragen von Sauerstoff in eine Salpetersäure führende Steigleitung im Längsschnitt.

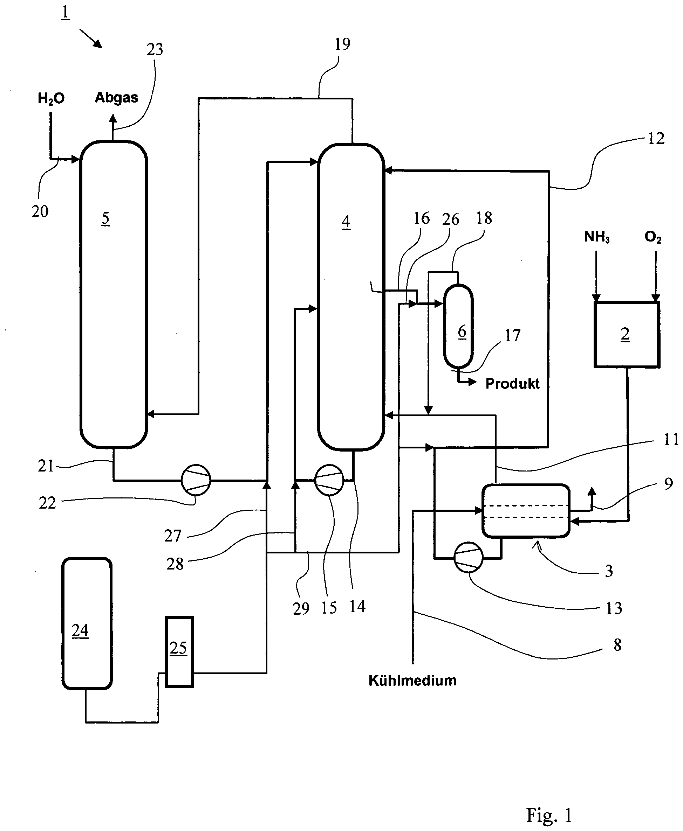

Fig. 1 zeigt eine Produktionsanlage 1 zur Herstellung von Salpetersäure. In an sich bekannter Weise umfasst die Produktionsanlage 1 eine Ammoniakverbrennungsanlage 2, einen Kondensator 3, mehrere, im Ausführungsbeispiel zwei, Absorptionstürme 4, 5 und eine Bleichkolonne 6. Bei den Absorptionstürmen 4, 5 handelt es sich im Ausführungsbeispiel um Nieder- und Mitteldruck-Kolonnen, die bei einem Betriebsdruck von 2 bis 5 bar(g) arbeiten; jedoch können auch Mitteldruck- oder Hochdruckkolonnen mit einem Betriebsdruck von bis zu 15 bar(g) zum Einsatz kommen.

Die Ammoniak-Verbrennungsanlage 2 dient dazu, gasförmigen Ammoniak und Sauerstoff in bei einer Temperatur zwischen 600°C und 900°C an einem Netzkatalysator aus einem Edelmetall, wie beispielsweise Platin oder einer Legierung aus Platin/Rhodium, zu Stickstoffmonoxid und Wasserdampf umzusetzen. Als Sauerstoff wird dabei üblicherweise Luftsauerstoff eingesetzt, jedoch kann auch reiner Sauerstoff mit einem Sauerstoffgehalt von >95 Vol.-% oder ein sonstiges sauerstoffhaltiges Gas zum Einsatz kommen. Die Reaktionsprodukte der in der Ammoniak-Verbrennungsanlage 2 ablaufenden Reaktion, im Wesentlichen Stickstoffmonoxid und Wasserdampf, sowie überschüssiger Sauerstoff werden dem Kondensator 3 zugeführt, in dem die Reaktionsprodukte durch thermischen Kontakt mit einem über eine Kühlmediumszuleitung 8 herangeführten Kühlmedium, beispielsweise Wasser oder verflüssigter oder kalter gasförmiger Stickstoff, auf eine Temperatur abgekühlt werden, bei der der Wasserdampf kondensiert, beispielsweise auf 60°C bis 80°C. Das beim Wärmetausch erwärmte Kühlmedium wird über eine Kühlmediumsausleitung 9 abgeführt und in die Atmosphäre entlassen oder einer anderweitigen Verwendung zugeführt. Ein Teil des Stickstoffmonoxids oxidiert mit überschüssigem Sauerstoff zu Stickstoffdioxid bzw. zu dessen Dimer Distickstofftetraoxid. Ein Teil der Stickoxide reagiert mit dem Wasser zu Salpetersäure, die sich am Boden des Kondensators 3 in einer wässerigen Lösung abscheidet. Das im Kondensator 3 vorhandene Gasgemisch wird über eine Gaszuleitung 11 in einen unteren Bereich des Absorptionsturms 4 eingeleitet. Die wässerige, Salpetersäure enthaltende Lösung aus dem Boden des Kondensators 3 wird über eine Steigleitung 12 dem Kopfraum des Absorptionsturms 4 zugeführt, wobei eine Fördereinrichtung 13 für den notwendigen Druck zur Überwindung des hydrostatischen Drucks in der Steigleitung 12 sorgt. Da Absorptionstürme häufig Bauhöhen von 30m und mehr aufweisen, ist der hydrostatische Druck im geodätisch unteren Bereich der Steigleitung 12 erheblich und beträgt beispielsweise 4,5 - 5 bar(g).

Die wässerige, Salpetersäure enthaltende Lösung aus dem Kondensator 3 wird mittels einer hier nicht näher erläuterten Düsenanordnung 15 in den Kopfraum des Absorptionsturms 4 eingesprüht, sinkt nach unten und kommt dabei mit den von unten aufsteigenden, stickoxidhaltigen Gasen in Kontakt. Dabei reagieren weitere Anteile der im Gasgemisch enthaltenen Stickoxide mit Wasser und dem im Gasgemisch enthaltenen Sauerstoff zu Salpetersäure, die sich in einer wässerigen Lösung im Bodenbereich des Absorptionsturms 4 ansammelt. Diese wässerige, Salpetersäure enthaltende Lösung wird über eine Steigleitung 14 abgezogen, mittels einer Fördereinrichtung 15 zu einem mittleren Bereich des Absorptionsturms 4 gefördert und dort eingesprüht.

In den Kopfraum des Absorptionsturms 5 wird Wasser aus einer Wasserzuleitung 20 eingesprüht. Das von unten aufsteigende, stickoxidhaltige Gasgemisch kommt im Absorptionsturm 5 mit dem eingesprühten Wasser in Kontakt und reagiert zumindest teilweise mit diesem und im Gasgemisch enthaltenem Sauerstoff zu Salpetersäure, die sich am Boden des Absorptionsturms 5 in einer wässerigen Lösung ansammelt. Diese wässerige, Salpetesäure enthaltende Lösung wird über eine Steigleitung 21 abgezogen und mittels einer Fördereinrichtung 22 zum Kopf der Absorptionskolonne 4 geführt und dort eingesprüht.

Im mittleren Bereich des Absorptionsturms 4 wird Salpetersäure enthaltende Lösung abgezogen und über eine Ableitung 16 der Bleichkolonne 6 zugeführt, gebleicht und über eine Produktausleitung 17 abgeführt. In der Bleichkolonne fällt wiederum stickoxidhaltiges Gas an, das über eine Leitung 18 in die Gasleitung 11 und über diese in den Absorptionsturm 4 eingeleitet wird.

Das im Absorptionsturm 4 verbliebene, stickoxidhaltige Gasgemisch wird über eine Gasableitung 19 abgeführt und in einen unteren Bereich des Absorptionsturms 5 eingeleitet. Im Absorptionsturm 5 noch vorhandenes Gasgemisch wird über eine Abgasleitung 23 abgeleitet und einer hier nicht gezeigten Einrichtung zur Entstickung zugeführt, in der die verbliebenen Stickoxide weitestgehend aus dem Gasgemisch entfernt werden. Aus Gründen der Übersichtlichkeit umfasst das in Fig. 1 gezeigte Ausführungsbeispiel nur zwei Absorptionskolonnen 4, 5; es sind im Rahmen der Erfindung selbstverständlich auch Ausführungsbeispiele mit drei oder mehr Absorptionstürmen denkbar, die von den stickoxidhaltigen Gasströmen und den wässerigen, Salpetersäure enthaltenden Lösungen in bekannter Weise im Gegenstrom durchlaufen werden.

Um den Sauerstoff-Partialdruck in den Absorptionskolonnen 4, 5 zu erhöhen und dadurch die Absorption der nitrosen Gase zu verbessern, wird den Absorptionskolonnen 4, 5 Sauerstoff zugeführt. Der Sauerstoff wird einer Quelle für Sauerstoff entnommen, bei der es sich im Ausführungsbeispiel um einen Tank 24 für flüssigen Sauerstoff handelt; es kann sich jedoch auch beispielsweise um einen Druckbehälter für gasförmigen Sauerstoff, eine Rohrleitung oder um eine Einrichtung zur Luftzerlegung handeln. Der flüssige Sauerstoff aus dem Tank 24 durchläuft in an sich bekannter Weise einen Luftverdampfer 25 und wird kalt, jedoch in Gasform über Sauerstoffzuleitungen 26, 27, 28, 29 den Steigleitungen 12, 14, 21 sowie der Ableitung 16 zugeführt. Anstelle der Vergasung in einem Luftverdampfer 25 kann der Kälteinhalt des verflüssigten Sauerstoffs im Übrigen auch zur Kühlung der Reaktionsprodukte aus der Ammoniak-Verbrennungsanlage 2 im Kondensator 3 herangezogen werden, indem beispielsweise das dort eingesetzte Kühlmedium einen Wärmetausch mit dem flüssigen Sauerstoff aus dem Tank 24 unterzogen wird, oder der flüssige Sauerstoff aus Tank 24 wird direkt dem Kondensator 3 als Kältemedium zugeführt.

Ein Teil des Sauerstoffs aus dem Tank 24 wird über die Sauerstoffzuleitung 26 in die Ableitung 16 geleitet und gemeinsam mit der durch die Ableitung 16 geführten, noch verunreinigten Salpetersäure in die Bleichkolonne (Bleichkolonne) 6 eingebracht. Dort unterstützt er die Bleiche insbesondere durch Entfernen von in der Salpetersäure etwaig noch gelösten Stickoxiden. Im Kopfraum der Bleichkolonne 6 sammelt sich eine sauerstoffreiche Gasphase an, die über Leitung 18 abgezogen und mit dem durch die Leitung 11 geführten Gasgemisch aus dem Kondensator 3 vereinigt wird.

Der Sauerstoff wird in einem geodätisch unteren Bereich der jeweiligen Steigleitung 12, 14, 21 und stromab zur jeweiligen Fördereinrichtung 13, 15, 22 eingebracht, um den hydrostatischen Druck der in der Steigleitung 12, 14, 21 vorliegenden Flüssigkeitssäule und ggf. einen durch die jeweilige Fördereinrichtung 13, 15, 22 erzeugten zusätzlichen Druck zu nutzen. Innerhalb des sich stromabwärts an den Eintragspunkt für den Sauerstoff anschließenden Abschnitts der Steigleitung 12, 14, 21 löst sich der Sauerstoff teilweise und es findet eine Reaktion von Stickoxiden, die in der Salpetersäure enthaltenden Lösung gelöst sind, mit Wasser und dem eingebrachten Sauerstoff unter Bildung von Salpetersäure statt. Ein Teil des im Überschuss eingebrachten Sauerstoffs reagiert nicht mit den Stickoxiden und gelangt gasförmig in den jeweiligen Absorptionsturm 4, 5, wo er zu einem höheren Sauerstoffpartialdruck führt, der wiederum die Bildung von Salpetersäure im jeweiligen Absorptionsturm 4, 5 begünstigt. Die Bildung von Salpetersäure wird weiterhin durch die tiefe Temperatur des zugeführten Sauerstoffs unterstützt.

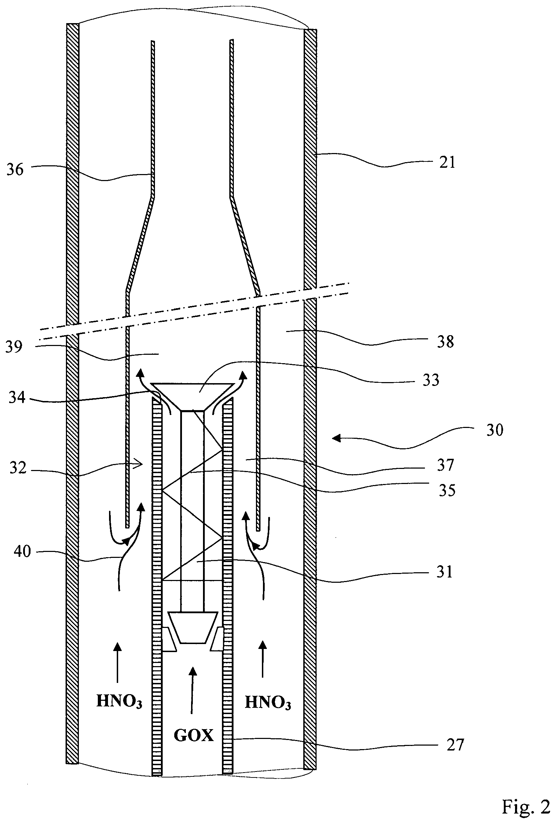

In Fig. 2 ist beispielhaft eine Injektionseinrichtung 30 zur Zuführung von Sauerstoff aus der Sauerstoffleitung 27 in die Salpetersäure enthaltende Lösung in Steigleitung 21 gezeigt. Die Sauerstoffzuleitung 27 mündet in einem geodätisch unteren Bereich der Steigleitung 21 ein, etwa auf Höhe oder unterhalb des Bodens des Absorptionsturms 4, und stromab zur Fördereinrichtung 22. Die Injektionseinrichtung 30, die zugleich den Endabschnitt der Sauerstoffleitung 27 bildet, ist koaxial innerhalb eines vertikal aufsteigenden Abschnitts der Steigleitung 21 angeordnet, wobei zwischen der Außenfläche der Injektionseinrichtung 30 und der Innenfläche der Steigleitung 21 ein Ringkanal verbleibt. Die Injektionseinrichtung 30 umfasst ein Druckventil 32 mit einem Sperrglied 31, das einen tellerförmigen Vorderabschnitt 33 aufweist, der auf seiner der Sauerstoffzuleitung 27 zugewandten Rückseite kegelstumpfartig zugeformt und damit in seiner Form der gleichfalls kegelstumpfartig eingeschnittenen Ausmündung 34 der Sauerstoffzuleitung 27 angepasst ist. Das Druckventil 32 ist so ausgebildet, dass das Sperrglied 31 nur gegen die Kraft einer Rückstellfeder 35 geöffnet werden kann. Dies ist dann der Fall, wenn die aufgrund des Drucks in der Sauerstoffzuleitung 27 auf das Sperrglied 31 wirkende Kraft die Summe aus der Rückstellkraft der Rückstellfeder 35 und der aufgrund des in der Steigleitung 21 wirkenden Drucks auf das Druckventil 32 wirkenden Kraft übersteigt. Dadurch wird gewährleistet, dass der Sauerstoff mit Überdruck gegenüber dem in der Steigleitung 21 herrschenden Druck eingeleitet wird. Durch die Wahl einer Rückstellfeder 35 mit einer entsprechenden Rückstellkraft kann bei der Ausführungsform nach Fig. 2 auf diese Weise leicht ein Mindestüberdruck festgelegt werden, den der Sauerstoff bei seiner Zuführung aufweisen soll. Koaxial zur Injektionseinrichtung 30 ist ein Strömungstrichter 36 angeordnet, der durch einen inneren Ringkanal 37 von der Injektionseinrichtung 32 und durch einen äußeren Ringkanal 38 von der Steigleitung 21 getrennt ist und der sich bis in einen Bereich 39 stromab zur Ausmündung 34 der Sauerstoffzuleitung 27 erstreckt. Der Strömungstrichter 36 verhindert zum einen, dass der an der Injektionseinrichtung 32 eingeleitete Sauerstoff nicht unmittelbar mit der Innenwand der Steigleitung 21 in Berührung kommt, wodurch eine hierdurch ansonsten verursachte Korrosion vermieden wird, zum anderen trägt er in der im Folgenden beschriebenen Weise dazu bei, dass eine innige Durchmischung des eingeleiteten Sauerstoffs mit der Salpetersäure enthaltenden Lösung in der Steigleitung 21 erfolgt.

Im Betriebszustand wird die Steigleitung 21 von unten nach oben - wie in Fig. 2 durch Pfeile angedeutet - von der Salpetersäure enthaltenden Lösung durchströmt. Zugleich wird Sauerstoff mit hohem Druck durch die Sauerstoffleitung 28 geführt, presst das Sperrglied 31 gegen die Kraft der Rückstellfeder 35 in seinen Öffnungszustand und strömt mit hoher Geschwindigkeit in den Bereich 39 vor der Mündungsöffnung der Injektionseinrichtung 30 ein. Dadurch wird im inneren Ringkanal 37 ein Unterdruck bewirkt, aufgrund dessen verstärkt Salpetersäure enthaltende Lösung durch den inneren Ringkanal 37 geführt wird, wobei - wie durch Pfeile 40 angedeutet - zudem Salpetersäure enthaltende Lösung aus dem äußeren Ringkanal 38 in den inneren Ringkanal 37 eingesogen wird. Im Bereich 39 liegt aufgrund des höheren lichten Leitungsquerschnitts ein höherer Druck vor, und es kommt es zu einer innigen Durchmischung von Sauerstoff und Salpetersäure enthaltender Lösung. In der Lösung vorhandene Stickoxide (überwiegend NO) reagieren mit Sauerstoff und Wasser zu Salpetersäure. Auf diese Weise steigt die Konzentration der Salpetersäure beim Durchlaufen der Steigleitung 21 bis zum Erreichen des Absorptionsturms 4 an. Um die Kontaktzeit der Reaktionspartner zu erhöhen und den Sauerstoff möglichst vollständig einzulösen, kann der sich stromab zum Strömungstrichter 36 anschließende Abschnitt der Steigleitung 21 mit einem verbreiterten Querschnitt ausgestattet sein, um in diesem Bereich die Strömungsgeschwindigkeit der Salpetersäure enthaltenden Lösung zu verlangsamen. Injektionssysteme wie die hier skizzierte Injektionseinrichtung 30 in der Steigleitung 21 können im übrigen an allen Steigleitungen 12, 14, 21 und der Ableitung 16, in denen Salpetersäure enthaltende Lösung in den Kopfraum eines Absorptionsturms 4, 5 gefördert wird, vorgesehen sein. Ein Injektionssystem wie die hier skizzierte Injektionseinrichtung 30 kann im Übrigen auch in einer vor einer Steigleitung 12, 14, 21 abzweigenden Bypassleitung (hier nicht gezeigt) angeordnet sein. Anstelle oder ergänzend zur Injektionseinrichtung 30 können jedoch auch andere Eintragsysteme für Sauerstoff vorgesehen sein, beispielsweise eine Einperlvorrichtung, mittels der der Sauerstoff in Form kleiner Gasblasen in die unter Druck stehende, Salpetersäure enthaltende Lösung eingetragen wird.

Weiterhin kann einer der Steigleitungen 12, 14, 21, stromab zur Injektionseinrichtung ein Katalysator, beispielsweise ein Metall-Katalysator vorgesehen sein, mittels dessen die Oxidation der in der Salpetersäure enthaltenden Lösung vorliegenden Stickoxide begünstigt wird. Ein solcher Katalysator kann beispielsweise an einem (hier nicht gezeigten) Raschid-Ring im Strömungsweg der Salpetersäure enthaltenden Lösung vorgesehen sind.

Die Erfindung ist insbesondere auch zur Nachrüstung in Altanlagen geeignet, die üblicherweise mit Absorptionskolonnen arbeiten, deren Betriebsdruck im Nieder- und Mitteldruckbereich, also bei etwa 1 bis 5 bar(g), liegt. Die gegenständliche Erfindung ist jedoch ebenso für die Nachrüstung von Hoch- und Dual-Druckanlagen einsetzbar. Hierbei könnte man sogar zu noch deutlich geringeren NOₓ Konzentrationen im Abgas gelangen, wodurch die Betriebskosten von Entstickungsanlagen deutlich verringert oder deren Einsatz sogar gänzlich vermieden werden könnte. Dabei können wesentliche Kosteneinsparungen durch Einsparung von Ammoniak und/oder Erdgas resultieren, welche üblicherweise für die Entstickung als Reduktionsmittel eingesetzt werden.

### Bezugszeichenliste

- 1.: Produktionsanlage
- 2.: Ammoniak-Verbrennungsanlage
- 3.: Kondensator
- 4.: Absorptionsturm
- 5.: Absorptionsturm
- 6.: Bleichkolonne
- 7.: -
- 8.: Kühlmediumszuleitung
- 9.: Kühlmediumsausleitung
- 10.: -
- 11.: Gaszuleitung
- 12.: Steigleitung
- 13.: Fördereinrichtung
- 14.: Steigleitung
- 15.: Fördereinrichtung
- 16.: Ableitung
- 17.: Produktausleitung
- 18.: Leitung
- 19.: Gasableitung
- 20.: Wasserzuleitung
- 21.: Steigleitung
- 22.: Fördereinrichtung
- 23.: Abgasleitung
- 24.: Tank
- 25.: Luftverdampfer
- 26.: Sauerstoffleitung
- 27.: Sauerstoffleitung
- 28.: Sauerstoffleitung
- 29.: Sauerstoffleitung
- 30.: Injektionseinrichtung
- 31.: Sperrglied
- 32.: Ventil
- 33.: Vorderabschnitt
- 34.: Ausmündung
- 35.: Rückstellfeder
- 36.: Strömungstrichter
- 37.: innerer Ringkanal
- 38.: äußerer Ringkanal
- 39.: Bereich
- 40.: Pfeil

## Patentansprüche

1. Verfahren zum Herstellen von Salpetersäure, bei dem
a. in einer Ammoniakverbrennungsanlage (2) Ammoniak mit Sauerstoff zu Stickoxiden und Wasserdampf umgesetzt wird,
b. die Stickoxide und der Wasserdampf aus Schritt (a.) in einem Kondensator (3) auf eine Temperatur abgekühlt werden, bei dem der Wasserdampf kondensiert, wobei die Stickoxide teilweise mit dem kondensierten Wasserdampf und Sauerstoff zu einer Salpetersäure enthaltenden Lösung reagieren und teilweise in einem stickoxidhaltigen Gasgemisch verbleiben,
c. das stickoxidhaltige Gasgemisch aus Schritt (b.) einem Absorptionsturm (4, 5) zugeführt wird, in dem es mit Wasser und Sauerstoff in Kontakt gebracht wird, wobei das stickoxidhaltige Gasgemisch mit dem Wasser und dem Sauerstoff zumindest teilweise unter Bildung einer wässerigen, Salpetersäure enthaltenden Lösung reagiert, die sich am Boden des Absorptionsturms (4, 5) ansammelt,
d. die Salpetersäure enthaltende Lösung aus Schritt (b) und/oder die Salpetersäure enthaltende Lösung aus Schritt (c.) vom Boden des Absorptionsturms (4, 5) bzw. dem Kondensator (3) abgezogen, mittels einer Fördereinrichtung (13, 15, 22) verdichtet und anschließend über eine Steigleitung (12, 14, 21) einem oberen Bereich des Absorptionsturms (4, 5) zugeführt wird,
**dadurch gekennzeichnet, dass**
e. die Salpetersäure enthaltene Lösung aus Schritt (b.) und/oder Schritt (c.) verdichtet und Sauerstoff in einen geodätisch unteren Bereich der die Salpetersäure enthaltende Lösung aus Schritt (b.) und/oder Schritt (c.) führenden Steigleitung/en (12, 14, 21) stromab zur Fördereinrichtung (13, 15, 22) eingeleitet wird.

2. Verfahren nach Anspruch 1, **dadurch gekennzeichnet**, die Salpetersäure enthaltende Lösung vor der Zuführung des Sauerstoffs auf einem Druck von zumindest 4,5 bar(g) gebracht wird.

3. Verfahren nach einem der vorhergehenden Ansprüche, **dadurch gekennzeichnet, dass** der in die Steigleitung/en (12, 14, 22) eingeleitete Sauerstoff im verflüssigten oder gasförmigen Zustand zugeführt wird.

4. Verfahren einem der vorhergehenden Ansprüche, **dadurch gekennzeichnet, dass** der in die Steigleitung/en (12, 14, 22) eingeleitete Sauerstoff mit einer Temperatur unter Umgebungstemperatur, bevorzugt von unter 0°C zugeführt wird.

5. Verfahren nach einem der vorhergehenden Ansprüche, **dadurch gekennzeichnet, dass** von der Salpetersäure enthaltenden Lösung ein Teilstrom abgezweigt wird, der verdichtet und mit Sauerstoff angereichert und anschließend dem Hauptstrom der Salpetersäure enthaltenden Lösung vor dessen Zuführung an den Kopfraum des Absorptionsturms (4, 5) zugeführt wird.

6. Produktionsanlage zum Herstellen von Salpetersäure,
mit einer Ammoniakverbrennungsanlage (2) zum Umsetzen von Ammoniak mit Sauerstoff zu Stickoxiden und Wasserdampf,
mit einem mit der Ammoniakverbrennungsanlage (2) verbundenen Kondensator (3) zum Abkühlen der Reaktionsprodukte aus der Ammoniakverbrennungsanlage (2) auf eine Temperatur unterhalb der Kondensationstemperatur von Wasser,
mit wenigstens einem, stromab zum Kondensator (3) angeordneten Absorptionsturm (4, 5) zum Waschen des im Kondensator (3) entstehenden Gasgemisches mit Wasser,
mit wenigstens einer Steigleitung (12, 14, 21) zum Zuführen einer Salpetersäure enthaltenden Lösung aus dem Kondensator (3) oder aus dem Bodenbereich des Absorptionsturms (4, 5) oder der Absorptionstürme (4,5), die mir einer Fördereinrichtung (15, 22, 13) ausgerüstet ist und die in einen oberen Bereich des Absorptionsturms (4, 5) oder eines der Absorptionstürme (4, 5) ausmündet,
**dadurch gekennzeichnet,**
**dass** wenigstens eine mit einer Quelle (24) für Sauerstoff verbindbare Sauerstoffzuleitung (26, 27, 28, 29) vorgesehen ist, die an einer in einem geodätisch unteren Bereich der Steigleitung (12, 14, 21) angeordneten Eintragseinrichtung (30), stromab zur Fördereinrichtung (15, 22, 13) in die Steigleitung (12, 14, 21) einmündet, wobei die Eintragseinrichtung (30) in Höhe oder unterhalb der Höhe des Bodens desjenigen Absorptionsturms (4, 5) angeordnet ist, in dessen oberen Bereich die Steigleitung (12, 14, 21) einmündet.

7. Produktionsanlage nach Anspruch 6, **dadurch gekennzeichnet, dass** die Steigleitung (12, 14, 21) eine Bypassleitung umfasst, in die die Sauerstoffzuleitung (26, 27, 28, 29) einmündet.

8. Produktionsanlage nach Anspruch 6 oder 7, **dadurch gekennzeichnet, dass** in der Steigleitung (12, 14, 21) eine Einrichtung zur Druckerhöhung vorgesehen ist, mittels der der Druck in der Steigleitung (12, 14, 21) bzw. in der Bypassleitung auf einen Wert bringbar ist, der höher als der zum Fördern der Salpetersäure enthaltenden Lösung zum Kopf des Absorptionsturms (4,5) erforderliche hydrostatische Druck ist.

9. Produktionsanlage nach Anspruch 6 bis 8, **dadurch gekennzeichnet dass** die Eintragseinrichtung (30) mit einem Druckventil (32) zum Festlegen eines minimalen Überdrucks des Sauerstoffs in der Sauerstoffzuleitung (26, 27, 28, 29) gegenüber dem Druck in der Steigleitung (12, 14, 21) ausgerüstet ist.

10. Produktionsanlage nach Anspruch 6 bis 9, **dadurch gekennzeichnet, dass** die Eintragseinrichtung (30) mit einem Endabschnitt ausgerüstet ist, der im wesentlichen in der Querschnittsmitte der Steigleitung (12, 14, 21) ausmündet, und im Bereich (39) vor der Mündungsöffnung der Eintragseinrichtung (30) eine Mischstrecke zum innigen Durchmischen von Sauerstoff und Salpetersäure enthaltender Lösung vorgesehen ist.

11. Produktionsanlage nach Anspruch 6 bis 10, **dadurch gekennzeichnet, dass** die Eintragseinrichtung (30) und/oder die stromab zur Eintragseinrichtung (30) angeordneten Abschnitte der Steigleitung (12, 14, 21) oder in der Bypassleitung, in die die Sauerstoffzuleitung (26, 27, 28, 29) einmündet, mit einem Katalysator zur Begünstigung der Reaktion der in der Salpetersäure enthaltenden Lösung vorliegenden Stickoxide mit dem eingeleiteten Sauerstoff ausgerüstet sind.

12. Produktionsanlage nach Anspruch 11, **dadurch gekennzeichnet, dass** der Katalysator in Form eines auf einem gesinterten keramischen Hohlkörper fein verteilt aufgebrachtes Medium vorliegt.

13. Produktionsanlage nach Anspruch 11 oder 12, **dadurch gekennzeichnet, dass** der Katalysator in einer Schüttkörperfüllung in der Steigleitung (12, 14, 21) oder in der Bypassleitung, in die die Sauerstoffzuleitung (26, 27, 28, 29) einmündet, vorliegt.

## Claims

1. Process for preparing nitric acid, in which
a. in an ammonia combustion plant (2), ammonia is reacted with oxygen to form nitrogen oxides and steam,
b. the nitrogen oxides and the steam from step (a.) are cooled in a condenser (3) to a temperature at which the steam condenses, wherein the nitrogen oxides in part react with the condensed steam and oxygen to form a nitric acid-containing solution and in part remain in a nitrogen oxide-containing gas mixture,
c. the nitrogen oxide-containing gas mixture of step (b.) is fed to an absorption tower (4, 5) in which it is brought into contact with water and oxygen, wherein the nitrogen oxide-containing gas mixture is reacted with the water and the oxygen at least in part with formation of an aqueous nitric acid-containing solution which collects at the bottom of the absorption tower (4, 5),
d. the nitric acid-containing solution of step (b) and/or the nitric acid-containing solution of step (c.) is taken off from the bottom of the absorption tower (4, 5) or from the condenser (3), compressed by means of a transport appliance (13, 15, 22) and then fed via a riser pipe (12, 14, 21) to an upper region of the absorption tower (4, 5),
**characterized in that**
e. the nitric acid-containing solution of step (b.) and/or step (c.) is compressed and oxygen is introduced into a geodetically lower region of the riser pipe/s (12, 14, 21) conducting the nitric acid-containing solution of step (b.) and/or step (c.) downstream of the transport appliance (13, 15, 22) .

2. Process according to Claim 1, **characterized in that** the nitric acid-containing solution is brought to a pressure of at least 4.5 bar (g) before the feed of the oxygen.

3. Process according to either one of the preceding claims, **characterized in that** the oxygen that is introduced into the riser pipe/s (12, 14, 22) is fed in the liquefied or gaseous state.

4. Process according to any one of the preceding claims, **characterized in that** the oxygen that is introduced into the riser pipe/s (12, 14, 22) is fed at a temperature below ambient temperature, preferably below 0°C.

5. Process according to any one of the preceding claims, **characterized in that** a substream is branched off from the nitric acid-containing solution, which substream is compressed and enriched with oxygen and then fed to the main stream of the nitric acid-containing solution before it is fed to the head space of the absorption tower (4, 5).

6. Production plant for preparing nitric acid,
having an ammonia combustion plant (2) for reacting ammonia with oxygen to form nitrogen oxides and steam,
having a condenser (3) that is connected to the ammonia combustion plant (2) for cooling the reaction products of the ammonia combustion plant (2) to a temperature below the condensation temperature of water,
having at least one absorption tower (4, 5) arranged downstream of the condenser (3) for scrubbing the gas mixture formed in the condenser (3) with water, having at least one riser pipe (12, 14, 21) for feeding a nitric acid-containing solution from the condenser (3) or from the bottom region of the absorption tower (4, 5) or of the absorption towers (4, 5), which riser pipe is equipped with a transport appliance (15, 22, 13) and which opens out into an upper region of the absorption tower (4, 5) or one of the absorption towers (4, 5),
**characterized in that**
at least one oxygen feed pipe (26, 27, 28, 29) that is connectable to a source (24) of oxygen is provided which discharges into the riser pipe (12, 14, 21) downstream of the transport appliance (15, 22, 13) at an introduction appliance (30) that is arranged in a geodetically lower region of the riser pipe (12, 14, 21), wherein the introduction appliance (30) is arranged at the height or beneath the height of the bottom of that absorption tower (4, 5) into the upper region of which the riser pipe (12, 14, 21) discharges.

7. Production plant according to Claim 6, **characterized in that** the riser pipe (12, 14, 21) comprises a bypass pipe into which the oxygen feed pipe (26, 27, 28, 29) discharges.

8. Production plant according to Claim 6 or 7, **characterized in that**, in the riser pipe (12, 14, 21), there is provided an appliance for pressure boosting, by means of which the pressure in the riser pipe (12, 14, 21) or in the bypass pipe is adjustable to a value which is higher than the hydrostatic pressure necessary for transporting the nitric acid-containing solution to the top of the absorption tower (4, 5).

9. Production plant according to Claim 6 to 8, **characterized in that** the introduction appliance (30) is equipped with a pressure valve (32) for setting a minimum overpressure of the oxygen in the oxygen feed pipe (26, 27, 28, 29) relative to the pressure in the riser pipe (12, 14, 21).

10. Production plant according to Claim 6 to 9, **characterized in that** the introduction appliance (30) is equipped with an end section which opens out substantially in the cross sectional center of the riser pipe (12, 14, 21), and in the region (39) upstream of the mouth opening of the introduction appliance (30), there is provided a mixing section for the intimate mixing of oxygen and nitric acid-containing solution.

11. Production plant according to Claim 6 to 10, **characterized in that** the introduction appliance (30) and/or the sections of the riser pipe (12, 14, 21) that are arranged downstream of the introduction appliance (30) or in the bypass pipe into which the oxygen feed pipe (26, 27, 28, 29) discharges are equipped with a catalyst for promoting the reaction of the nitrogen oxides that are present in the nitric acid-containing solution with the oxygen that is introduced.

12. Production plant according to Claim 11, **characterized in that** the catalyst is present in the form of a medium that is applied in finely divided form on a sintered ceramic hollow body.

13. Production plant according to Claim 11 or 12, **characterized in that** the catalyst is present in a bulk packing in the riser pipe (12, 14, 21) or in the bypass pipe into which the oxygen feed pipe (26, 27, 28, 29) discharges.

## Revendications

1. Procédé de production d'acide nitrique dans lequel
a. dans une installation de combustion d'ammoniac (2) on fait réagir de l'ammoniac avec de l'oxygène pour obtenir des oxydes d'azote et de la vapeur d'eau,
b. les oxydes d'azote et la vapeur d'eau de l'étape (a.) sont refroidis dans un condenseur (3) à une température dans lequel la vapeur d'eau se condense, les oxydes d'azote réagissant partiellement avec la vapeur d'eau condensée et l'oxygène pour former une solution qui contient de l'acide nitrique et restant en partie dans un mélange gazeux qui contient des oxydes d'azote,
c. le mélange gazeux qui contient des oxydes d'azote de l'étape (b.) étant amené à une tour d'absorption (4, 5) dans laquelle il est mis en contact avec de l'eau et de l'oxygène, le mélange gazeux qui contient des oxydes d'azote réagissant au moins en partie avec l'eau et l'oxygène pour former une solution aqueuse qui contient de l'acide nitrique qui s'accumule au bas de la tour d'absorption (4, 5),
d. la solution qui contient de l'acide nitrique de l'étape (b) et/ou la solution qui contient de l'acide nitrique de l'étape (c.) étant prélevée au bas de la tour d'absorption (4, 5) ou sur le condenseur (3), comprimée à l'aide d'un moyen de transport (13, 15, 22) puis amenée par le biais d'une colonne montante (12, 14, 21) à une région supérieure de la tour d'absorption (4, 5),
**caractérisé en ce que**
e. la solution qui contient de l'acide nitrique de l'étape (b.) et/ou de l'étape (c.) est comprimée et de l'oxygène est introduit dans une région géodésiquement inférieure de l'au moins une colonne montante (12, 14, 21) menant la solution, qui contient de l'acide nitrique, de l'étape (b.) et/ou de l'étape (c.) en aval du moyen de transport (13, 15, 22).

2. Procédé selon la revendication 1, **caractérisé en ce que** la solution qui contient de l'acide nitrique est portée à une pression d'au moins 4,5 bar (g) avant d'amener l'oxygène.

3. Procédé selon l'une des revendications précédentes, **caractérisé en ce que** l'oxygène introduit dans l'au moins une colonne montante (12, 14, 22) est acheminé l'état liquéfié ou gazeux.

4. Procédé selon l'une des revendications précédentes, **caractérisé en ce que** l'oxygène introduit dans l'au moins une colonne montante (12, 14, 22) est acheminé à une température inférieure à la température ambiante, de préférence inférieure à 0 °C.

5. Procédé selon l'une des revendications précédentes, **caractérisé en ce qu'**un flux partiel est dérivé de la solution qui contient de l'acide nitrique, lequel est comprimé et enrichi en oxygène puis amené au flux principal de la solution qui contient de l'acide nitrique avant d'amener celle-ci dans l'espace de tête de la tour d'absorption (4, 5).

6. Installation de production pour la production d'acide nitrique, comprenant
une installation de combustion d'ammoniac (2) destinée à faire réagir de l'ammoniac avec de l'oxygène pour obtenir des oxydes d'azote et de la vapeur d'eau,
un condenseur (3) relié à l'installation de combustion d'ammoniac (2) et destiné à refroidir les produits de réaction provenant de l'installation de combustion d'ammoniac (2) à une température inférieure à la température de condensation de l'eau,
au moins une tour d'absorption (4, 5) disposée en aval du condenseur (3) et destinée à laver le mélange gazeux, formé dans le condenseur (3), avec de l'eau,
au moins une colonne montante (12, 14, 21) destinée à amener une solution, qui contient de l'acide nitrique, depuis le condenseur (3) ou la région de fond de la tour d'absorption (4, 5) ou des tours d'absorption (4, 5), qui est équipée d'un moyen de transport (15, 22, 13) et qui débouche dans une région supérieure de la tour d'absorption (4, 5) ou de l'une des tours d'absorption (4, 5),
**caractérisée en ce que**
au moins un conduit d'amenée d'oxygène (26, 27, 28, 29) pouvant être relié à une source d'oxygène (24) est prévu, lequel débouche dans la colonne montante (12, 14, 21) en aval du moyen de transport (15, 22, 13) au niveau d'un moyen d'entrée (30) disposé géodésiquement dans une région inférieure de la colonne montante (12, 14, 21), le moyen d'entrée (30) étant disposé au niveau ou au-dessous du niveau du bas de la tour d'absorption (4, 5) dans la région supérieure de laquelle la colonne montante (12, 14, 21) débouche.

7. Installation de production selon la revendication 6, **caractérisée en ce que** la colonne montante (12, 14, 21) comprend un conduit de dérivation dans lequel débouche le conduit d'amenée d'oxygène (26, 27, 28, 29) .

8. Installation de production selon la revendication 6 ou 7, **caractérisée en ce qu'**un moyen d'augmentation de pression est prévu dans la colonne montante (12, 14, 21) à l'aide duquel la pression dans la colonne montante (12, 14, 21) ou dans le conduit de dérivation peut être portée à une valeur qui est supérieure à la pression hydrostatique nécessaire pour amener la solution qui contient de l'acide nitrique en haut de la tour d'absorption (4, 5).

9. Installation de production selon les revendications 6 à 8, **caractérisée en ce que** le moyen d'entrée (30) est équipé d'une soupape de pression (32) destinée à définir une surpression minimale de l'oxygène dans le conduit d'amenée d'oxygène (26, 27, 28, 29) par rapport à la pression dans la colonne montante (12, 14, 21).

10. Installation de production selon les revendications 6 à 9, **caractérisée en ce que** le moyen d'entrée (30) est équipé d'une partie d'extrémité qui débouche sensiblement au milieu en coupe transversale de la colonne montante (12, 14, 21) et, dans la région (39) située devant l'embouchure du moyen d'entrée (30), une section de mélange destinée à mélanger intimement de l'oxygène et une solution contenant de l'acide nitrique est prévue.

11. Installation de production selon les revendications 6 à 10, **caractérisée en ce que** le moyen d'entrée (30) et/ou les parties, disposées en aval du moyen d'entrée (30), de la colonne montante (12, 14, 21) ou dans le conduit de dérivation dans laquelle ou lequel débouche le conduit d'amenée d'oxygène (26, 27, 28, 29), sont équipés d'un catalyseur destiné à favoriser la réaction des oxydes d'azote, présents dans la solution qui contient de l'acide nitrique, avec l'oxygène introduit.

12. Installation de production selon la revendication 11, **caractérisée en ce que** le catalyseur se présente sous la forme d'un milieu appliqué de manière finement répartie sur un corps creux en céramique fritté.

13. Installation de production selon la revendication 11 ou 12, **caractérisée en ce que** le catalyseur est présent dans une matière de remplissage en vrac se trouvant dans la colonne montante (12, 14, 21) ou dans le conduit de dérivation dans laquelle ou lequel débouche le conduit d'amenée d'oxygène (26, 27, 28, 29) .
